Europäisches Patentamt

European Patent Office

Office européen des brevets

(11) Publication number: **0 328 306 B1**

# EUROPEAN PATENT SPECIFICATION

(45) Date of publication of patent specification: **26.01.94**   (51) Int. Cl.5: **G11B 5/60**

(21) Application number: **89301036.3**

(22) Date of filing: **02.02.89**

(54) **Magnetic head assembly and disk file employing same.**

(30) Priority: **12.02.88 US 155328**

(43) Date of publication of application:
**16.08.89 Bulletin 89/33**

(45) Publication of the grant of the patent:
**26.01.94 Bulletin 94/04**

(84) Designated Contracting States:
**BE CH DE FR GB LI NL SE**

(56) References cited:
**DE-A- 1 522 971**

**CRYOGENICS, vol. 27, no. 1, January 1987, pages 8-11, Butterworth & Co. (Publishers) Ltd, Guildford, Surrey, GB; A. RIVETTI et al.: "Turbine flowmeter for liquid helium with the rotor magnetically levitated"**

**APPLIED PHYSICS LETTERS, vol. 51, no. 17, 26th October 1987, pages 1367-1369, American Institute of Physics, New York, US; I.K. GOPALAKRISHNAN et al.: "Effect of slow cooling rates on the superconducting characteristics of YBa2Cu3O7-x"**

**PATENT ABSTRACTS OF JAPAN, vol. 4, no. 156 (P-34)[638], 31st October 1980, page 159**

P 34; & JP-A-55 105 860 (HITACHI SEISAKUSHO K.K.) 13-08-1980

**IBM TECHNICAL DISCLOSURE BULLETIN, vol. 23, no. 9, February 1981, pages 4310-4311, New York, US; A.R. TIETZE: "Disk file with reduced or eliminated air effects"**

(73) Proprietor: **International Business Machines Corporation**
**Old Orchard Road**
**Armonk, N.Y. 10504(US)**

(72) Inventor: **Williams, Mason Lamar, III**
**5826 Vargas Court**
**San Jose California 95120(US)**
Inventor: **Coufal, Hans Juergen**
**6338, Paso Los Cerritos**
**San Jose California 95120(US)**

(74) Representative: **Burt, Roger James, Dr.**
**IBM United Kingdom Limited**
**Intellectual Property Department**
**Hursley Park**
**Winchester Hampshire SO21 2JN (GB)**

EP 0 328 306 B1

## Description

### Technical Field of the Invention

This invention relates to a magnetic head assembly, which utilizes a superconducting layer to maintain a close spacing between the magnetic head and a magnetic recording surface. The invention also relates to disk files employing such head assemblies.

### Background of the Invention

Magnetic head assemblies that fly relative to magnetic media have been used extensively. These assemblies provide a noncontact transducing relationship between a magnetic transducer and a magnetic recording medium, such as a rotating magnetic disk, so that a stable constant spacing can be maintained between the transducer and the disk. This stable constant spacing has been maintained in prior art systems by means of an air bearing slider by which the magnetic transducer is supported. One example of an air bearing slider is commonly assigned U.S. patent 4,475,135 to Warner et al. As is known in the art, the steady state flying characteristics of an air bearing slider are determined by the bearing geometry, the fluid dynamics of air between the slider and the spinning disk, and the mechanical properties of the suspension system. These can cause the flying height to vary over different areas of the disk, depending on its speed.

It is also known in the art that, to provide reliable data detection, the head-disk interface must possess adequate bearing stiffness to provide separation stability within about ten percent in the face of axial accelerations and adequate pitch and roll stiffness to avoid contact with the disk during radial acceleration associated with track accessing.

Recent progress in high temperature superconducting materials has encouraged practical applications of such materials. One important phenomenon associated with superconducting materials is ideal diamagnetism, the so-called Meissner Effect. This phenomenon relates to the fact that, within a superconductor, no appreciable magnetic field exists, up to a critical field, which is a function of temperature. An ideal diamagnet, such as a superconductor, can be described as a magnetic mirror. A magnet and its mirror image repel each other, however, with a force that is proportional to the square of (Magnetization$_z$/Distance), with the subscript z indicating that only the magnetic field component perpendicular to the surface of the superconductor contributes to the force. This force, which is independent of the polarity of the magnet, enables levitation of a magnet over a superconducting surface or levitation of a superconductor over a magnet. This force acts like a progressive spring with instantaneous response.

An article entitled 'Turbine flowmeter for liquid helium with the rotor magnetically levitated' (Cryogenics 1987 Vol 27 January, p.8-11) describes an application of the Meissner effect wherein a rotor is suspended between two supports. The clearance between the rotor and the adjacent support surface is between 1.1 and 1.3 mm.

At small spacings, however, it can be shown that the stiffness of a uniform permanent magnet over a superconducting surface vanishes for spacings small compared to the magnet size; that is, the force becomes constant so that there is nothing to control the separation.

### Disclosure of the Invention

The present invention provides a magnetic head/disk assembly for a magnetic disk file comprising: a rotatable magnetic recording disk having data recorded on a surface thereof, encoded according to a code defining a maximum distance between transitions, and a magnetic transducer assembly movable generally radially relative to the disk surface the transducer assembly comprising: a slider body having a first surface positioned to face the surface of the disk, a magnetic transducer supported on a second surface of the slider body; and means for urging the head assembly towards the surface of the disk; characterised by a layer of superconducting material disposed on the first surface of the slider body, the superconducting material exhibiting superconducting properties below a critical temperature; whereby when the layer of superconducting material is cooled to a temperature below its critical temperature, magnetic forces are developed between the layer of superconducting material and the disk, the developed forces causing the transducer assembly to be urged away from the surface of the disk, against the action of the urging means, to a predetermined height above the disk surface.

A magnetic head assembly of this type, by incorporating a layer of superconducting material, uses the Meissner effect to maintain a separation between the magnetic head and the surface of a spinning magnetic disk which is substantially independent of disk speed.

It is preferable that the layer of superconducting material comprises a material having a critical temperature above 77K. Preferably this layer of superconducting material comprises an oxide ceramic superconductor, preferably taken from the group consisting of Rare Earth Barium Copper oxides ($RBa_2Cu_3O_7$), with the rare earth material R being Y, Nd, Sm, Eu, Gd, Dy, Ho, Er, Tm, Yb or Lu; Calcium Lanthanum Barium Copper Oxide (Ca La Ba Cu$_3$ O$_7$); and Bismuth Strontium Calcium Copper oxide compounds.

The invention also provides a disk file comprising a magnetic head/disk assembly of the type described above, further comprising cooling means for cooling the superconducting material to a temperature below its critical temperature. Preferably the magnetic head assembly in the disk file is maintained in a vacuum of a predetermined level. Alternatively, the magnetic head assembly in the disk file is maintained in a gas so that the predetermined spacing of the magnetic head assembly from the surface of the magnetic recording medium is due not only to magnetic forces between the magnetised magnetic recording medium and said layer of superconducting material but also to the aerodynamic forces of said gas on the magnetic head assembly during rotation of the medium. Preferably the gas is helium and it is further preferred that the slider body in the disk file is shaped to enhance the aerodynamic characteristics of the slider within the gas.

Preferably the magnetically recorded data comprises run length limited coded data.

Brief Description of the Drawings

Fig. 1 is a simplified diagram of a disk file according to the present invention;
Fig. 2 is a schematic view of a magnetic head assembly according to the present invention adjacent to a magnetic recording disk, both employed in the disk file of Fig. 1;
Fig. 3 is a cross-section view taken along line 3-3 of Fig. 2;
Fig. 4 is a cross-section view of an alternative embodiment of the magnetic head assembly and disk according to the present invention;
Fig. 5 is a cross-section view of a further magnetic head assembly and disk according to the present invention; and
Fig. 6 shows the geometry for calculation of the force between a magnetized layer and a parallel superconductor.

Detailed Description of the Invention

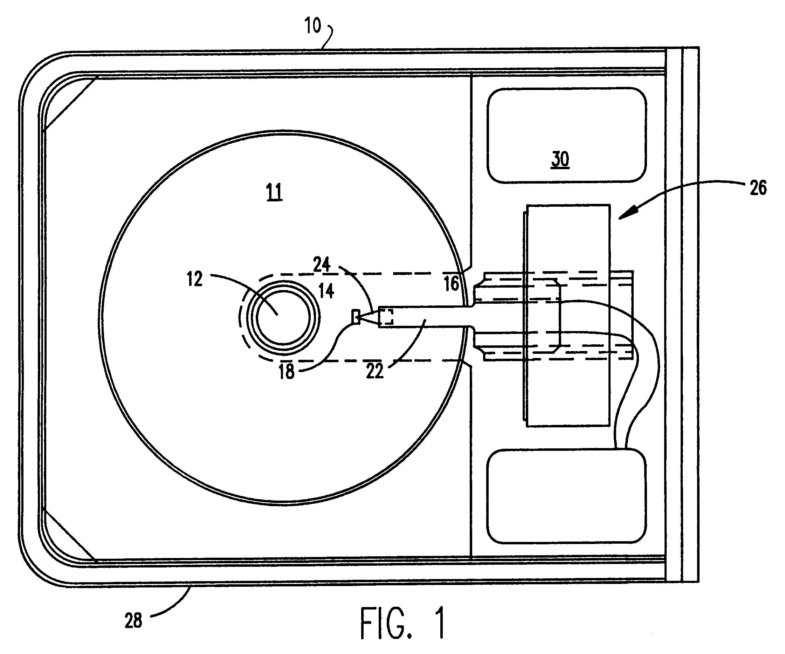

In a magnetic disk file 10 as shown in Fig. 1, a plurality of rigid rotatable disks, such as disk 11 are supported on a spindle 12 and rotated by a disk drive motor (not shown). The magnetic recording media on each disk is in the form of an annular pattern of concentric data tracks having an inside data band 14 and an outside data band 16, as shown on disk 11.

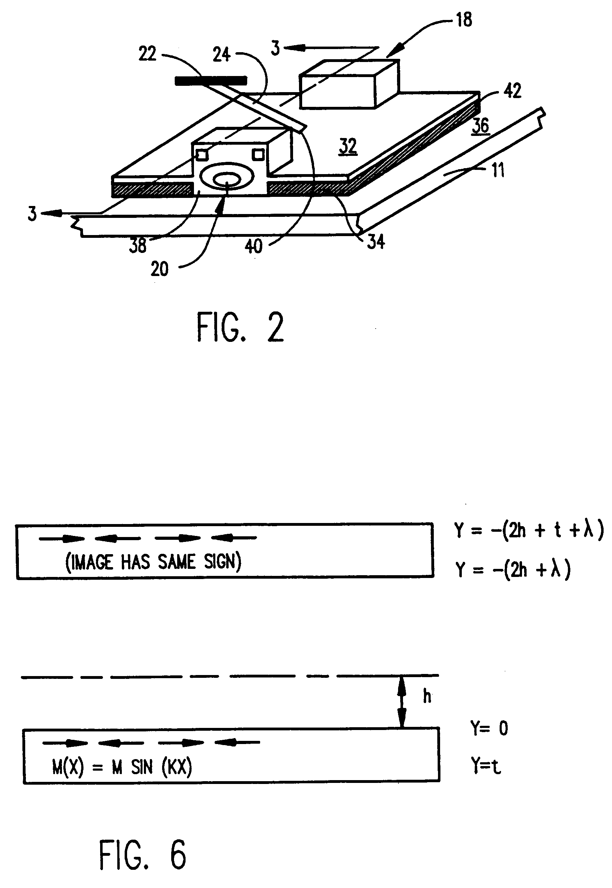

As the disks rotate, the magnetic head assemblies 18 are moved radially in and out so that the heads may access different portions of the disk surfaces containing the data. Each head assembly 18 supports one or more read/write heads 20 (Fig. 2) and is attached to an actuator arm 22 by means of a suspension 24. The suspensions 24 provide a slight spring force which biases the head assemblies toward the disk surfaces. Each actuator arm 22 is attached to an accessing mechanism such as a voice coil motor (VCM) 26.

The above description of a typical disk file, and the accompanying illustration of it in Fig. 1, are for representative purposes only. It should be apparent that disk files may contain a large number of disks and VCMs and that each VCM may support a number of sliders. Alternatively, the disk file may contain only a single disk.

In contrast to prior art air bearing slider operation, the present invention eliminates the air from the disk file and regulates the spacing between head and disk by magnetic forces between the magnetized recording medium and a superconducting layer on the slider. These forces arise from the Meissner Effect which expels flux from the superconductor by establishing currents which cancel the field in the superconductor produced by the recorded magnetic transitions on the disk. Since the recorded alternating field such as, for example, data generates a suitable field gradient, the spacing between the magnetic head and the magnetic recording medium can be maintained to a stable value as will be discussed in greater detail below. This operation has the advantage that the spacing between head and disk is independent of the relative velocity between the magnetic head assembly and the disk. In addition, the spacing is maintained even when the disk is at rest.

The magnetic disk file 10, according to the present invention, is provided with a hermetically sealed enclosure 28 capable of holding a suitable gas at a suitable pressure. In operation, the sealed enclosure 28 is evacuated to a suitable vacuum such as 0,33 - 1,33•10$^-$ Pa (10$^{-3}$ to 10$^{-7}$ Torr) for example, through a suitable port (not shown). After the desired pressure is reached, the sealed enclosure can be backfilled, if desired, for improved heat transfer, with a suitable gas such as helium to a suitable pressure up to several hundred torr, for example. The chosen gas must not liquefy or solidify at the chosen temperature of the magnetic disk file.

In addition, a cooling means 30 is provided to cool the selected superconducting material to a temperature lower than the critical temperature, T$_c$, at which the selected material exhibits superconducting properties. Cooling means 30 may comprise any suitable apparatus for cooling to the desired temperature. One suitable cooling device uses a reservoir of liquid nitrogen. A second cooling means comprises a refrigerator such as a closed cycle Sterling engine. A further example of the cooling means comprises a Thermo- Electric solid state cooling device. In the embodiment in which a vacuum is maintained within enclosure 28, transfer of heat from the slider is by way of conduction along the suspension 24 and arm 22. In cases in which a gas is introduced into enclosure 28, the gas, such as helium, serves as an exchange gas for heat transfer by convection in addition to the heat transfer by conduction.

Within the past two years, a large number of superconducting materials have been described in the scientific literature having critical temperatures above 77K. In view of the disclosure of these materials, in a specific embodiment, cooling means 30 uses liquid nitrogen as the coolant, and this cooling means is capable of cooling the selected material to 77K. In this case, the gas chosen 32 for sealed enclosure 28 must be one that neither liquifies nor solidifies at 77K. Possible choices are hydrogen, helium and neon. Safety concerns eliminate the flammable/explosive hydrogen as the choice, and of the other two possible choices, helium was chosen in a specific embodiment.

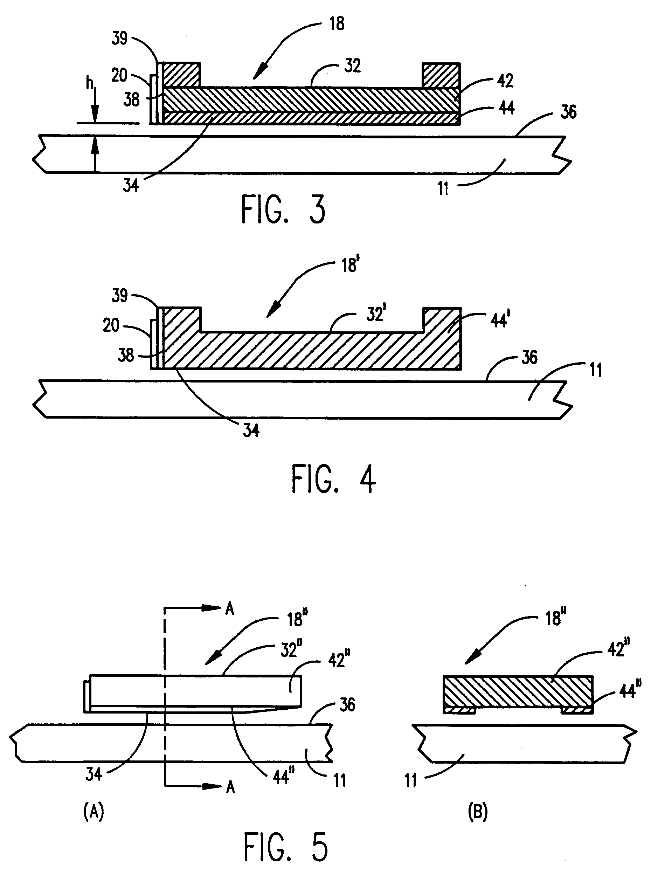

A specific embodiment of the magnetic head assembly, according to the present invention, is shown in Figs. 2 and 3. The head assembly 18 comprises a body slider 32 which has a first surface 34 which faces and, in operation, is maintained a very small uniform spacing, h, from the surface 36 of the magnetic recording medium such as disk 11. The magnetic read/write head 20 is supported on a second surface 38 of the head assembly 18 in a position so that the transducing gap is also supported a very small uniform distance from the surface 36 of the magnetic recording medium. If desired, a non-conductive layer 39 can be deposited on surface 39 prior to fabrication of read/write head 20. The suspension 24 is usually made of spring metal, such as beryllium copper, for example, and the suspension 24 is designed to provide an approximately constant force holding the slider 18 against the disk surface 36. The suspension is preferably attached at a position 40 which spans the center of mass of the head assembly 18. This attachment insures that accessing accelerations produce negligible torque tending to disturb the slider facing attitude to surface 36, while providing roll stability directly.

In (Fig. 3) the slider body 32 comprises a first layer 42 of ceramic or similar material and a superconductor levitation layer 44 on the first surface 34 which faces the surface 36 of the magnetic recording medium. The superconductor levitation layer must have a thickness of at least several times (3 times or more) the penetration depth of a magnetic field into the superconductor for optimum performance. Alternatively, the superconductor levitation layer 44' may comprise the entire slider body 32' of the head assembly 18' as shown in Fig. 4.

In cases in which a gas is introduced into the enclosure 28, the slider body may be contoured in such a manner that the slider is maintained in the desired position relative to the recording medium by the combined effects of the levitation produced by the superconductor levitation layer and the aerodynamic effects produced by relative motion in the gas between the shaped slider and the recording medium. As shown in Fig. 5, the magnetic head assembly 18'' comprises a slider body 32'' in which the levitation layer 44'' is shaped to form side rails and the end of the slider away from read/write head 20 is provided with a taper section. The remainder of body portion 32 is formed of a suitable ceramic or similar material 42''.

In principle, any superconductor material having suitable mechanical properties can be used as the superconductor levitation layer 44. Examples of suitable low temperature superconductor materials include Niobium, $Niobium_3$-Tin, $Niobium_3$-Aluminum, and $Niobium_{0.79}$ ($Aluminum_{0.73}$ $Germanium_{0.27})_{0.21}$. However, the preferred superconductor materials are those having a critical temperature, $T_c$, above 77K. An important class of these materials are the oxide ceramic superconductors. Specific materials which are known to have suitable properties so that they can be used as superconductor levitation layer 44 include Rare Earth Barium Copper Oxides ($R\ Ba_2\ Cu_3\ O_7$), with the rare earth material R being Y, Nd, Sm, Eu, Gd, Dy, Ho, Er, Tm, Yb or Lu; Calcium Lanthanum Barium Copper Oxide ($Ca\ La\ Ba\ Cu_3\ O_7$); and Bismuth Strontium Calcium Copper Oxide compounds.

The force between a sinusoidally magnetized layer and a parallel superconductor can be calculated by considering the image magnetization that is produced by the Meissner effect in the superconductor. The non-zero penetration depth, lambda, results in the apparent image being at a distance of twice the physical separation, h, plus the penetration depth. This means it will be difficult to achieve adequate stiffness if the penetration depth is more than a few times the desired nominal spacing. It is simplest to consider only a sinusoidally magnetized medium. The linearity of this problem allows the force for arbitrary magnetization to be calculated by adding the forces due to various Fourier components. It will be seen that it is desirable to limit the wavelength range of possible recorded data by using, for example, an appropriate run length limited code to ensure that there are no long distances with no transitions under the head body. The simplified geometry for the force calculation is in Fig. 6. In the figure, t is the thickness of the magnetized recording medium,

$\lambda$ is the penetration depth of the superconductor, and h is the spacing between the magnetized recording medium and the superconductor.

The field at the medium due to the image is given by

$$H_{image} = 2\pi M \sin(kx)e^{-ky}e^{-k(2h+\lambda)}[1 - e^{-kt}],$$

where M is in emu/cc, k is $2\pi$ divided by the recorded wavelength, x is distance in the direction of the magnetization variation, and y is the distance (in the medium) from the surface of the medium closest to the superconductor.

The force in dynes is given by

$$F = 2A\pi M^2 e^{-k(2h+\lambda)}[1 - e^{-kt}]^2,$$

where A is the area in sq cm.

The stiffness is given by

$$C = \frac{dF}{dh} = 4kA\pi M^2 e^{-k(2h+\lambda)}[1 - e^{-kt}]^2$$

For $kt \gg 1$, the maximum stiffness is obtained when $k = (2h + \lambda)^{-1}$ and is given by

$$C_{max} = \frac{4A\pi M^2}{e(2h + \lambda)}$$

The maximum field from the medium at the location of the superconductor must be lower than the critical field $H_{c1}$, and this is given by $2\pi M = H_{c1}$ so we may write

$$C_{max} = \frac{AH_{c1}^2}{\pi e(2h + \lambda)}.$$

The maximum mass per unit area supportable in the presence of acceleration a with tolerable height disturbance of Delta h is

$$\frac{m}{A} = \frac{H_{c1}^2 (\Delta h)}{\pi e a(2h + \lambda)}.$$

For 400 Oe (32000 A/m) critical field, 10 percent spacing tolerance, 1 G disturbing accelerations, and penetration depth = 3 times flying height, the supportable mass is about 0.4 gm/ sq cm.

If Mr is 400 and t is 0.05 micron,

$$H_{max} = 2\pi M[1 - e^{-kt}] = 400 \text{ Oe (32000 A/m)}$$

if the recorded wavelength is about 1.5 microns. The levitated slider has comparable support capability if data is sufficiently averaged.

The levitation bearing like many air bearings, requires an external load force be applied to establish the equilibrium spacing. For 400 Oe (32000 A/m) and 2 microinch (0,0508 $\mu$m) spacing, the nominal load would be about 10 grams weight of force per square centimeter.

The maximum force capability of the levitation bearing at small clearance would be about 27 grams weight of force per square centimeter.

The nominal stiffness at 2 microinches (0,05 $\mu$m) is about

7.8 x $10^5$ dynes/cm per sq cm or 7800 N/m per sq cm.

This calculation has shown that the levitation stiffness is adequate for a practical combination of recorded wavelengths and spacings if material parameters are chosen appropriately. In particular, the penetration depth of the superconductor should be not much greater than the desired head-medium spacing, h; the first critical field $H_{c1}$ should be larger than the field from the recorded medium, and the maximum distance between recorded transitions should be about $\pi$ x (2h + $\lambda$).

## Claims

1. A magnetic head/disk assembly for a magnetic disk file comprising:

a rotatable magnetic recording disk, having data recorded on a surface thereof, encoded according to a code defining a maximum distance between transitions; and

a magnetic transducer assembly (18) movable generally radially relative to the disk surface the transducer assembly comprising :

a slider body (32) having a first surface positioned to face the surface (36) of the disk (11); a magnetic transducer (20) supported on a second surface of the slider body; and means (24) for urging the transducer assembly towards the surface of the disk; characterised by

a layer (44) of superconducting material disposed on the first surface of the slider body, the superconducting material exhibiting superconducting properties below a critical temperature;

whereby when the layer of superconducting material is cooled to a temperature below its critical temperature, magnetic forces are developed between the layer of superconducting material and the disk, the developed forces causing the transducer assembly to be urged away from the surface of the disk, against the action of the urging means, to a predetermined height above the disk surface.

2. A magnetic head/disk assembly as claimed in claim 1 wherein said layer of superconducting material comprises a material having a critical temperature above 77 degrees K.

3. A magnetic head/disk assembly as claimed in claim 2 wherein said layer of superconducting material comprises an oxide ceramic superconductor.

4. A magnetic head/disk assembly as claimed in claim 3 wherein said layer of superconducting material comprises a material taken from the group consisting of Rare Earth Barium Copper Oxides (R Ba$_2$ Cu$_3$ O$_7$), with the rare earth material R being Y, Nd, Sm, Eu, Gd, Dy, Ho, Er, Tm, Yb or Lu; Calcium Lanthanum Barium Copper Oxide (Ca La Ba Cu3 O7); and Bismuth Strontium Calcium Copper Oxide compounds.

5. A disk file (10) comprising a magnetic head/disk assembly as claimed in any one of claims 1 to 4 further comprising:
cooling means (30) for cooling the layer of superconducting material to a temperature below its critical temperature.

6. A disk file as claimed in claim 5 in which the magnetic head assembly is maintained in a vacuum of a predetermined level.

7. A disk file as claimed in claim 5 in which the magnetic head assembly is maintained in a gas so that the predetermined height of the magnetic head assembly above the surface of the magnetic recording medium is due not only to magnetic forces between the magnetised magnetic recording disk and said layer of superconducting material but also to the aerodynamic forces of said gas on the magnetic head assembly during rotation of the medium.

8. A disk file as claimed in claim 7 wherein said gas is helium.

9. A disk file as claimed in either claim 7 or claim 8 wherein said slider body (32) is shaped to enhance the aerodynamic characteristics of the slider within the gas.

10. A disk file as claimed in any one of claims 5 to 9 wherein said magnetically recorded data comprises run length limited coded data.

**Patentansprüche**

1. Eine Magnetkopf-/platten-Vorrichtung für einen magnetischen Plattenspeicher, der folgendes umfaßt:
eine rotierbare magnetische Speicherplatte, auf deren Fläche Daten aufgezeichnet und entsprechend einem Code, der einen maximalen Abstand zwischen Übergängen definiert, kodiert sind; und
eine magnetische Wandler-Vorrichtung (18), die im allgemeinen in bezug auf die Plattenoberfläche radial beweglich ist, wobei die Wandler-Vorrichtung folgendes umfaßt:
ein Schiebergehäuse (32) mit einer ersten Fläche, die so ausgerichtet ist, daß sie der Oberfläche (36) der Platte (11) gegenüber liegt;
einen Magnetwandler (20), der auf einer zweiten Fläche des Schiebergehäuses angebracht ist; und
ein Mittel (24), um die Wandler-Vorrichtung gegen die Oberfläche der Platte zu drücken, dadurch charakterisiert, daß
sich eine Schicht (44) supraleitenden Materials auf der ersten Fläche des Schiebergehäuses befindet, wobei das supraleitende Material unterhalb einer kritischen Temperatur supraleitende Eigenschaften aufweist;
wobei, wenn die Schicht supraleitenden Materials auf eine unterhalb der kritischen Temperatur liegende Temperatur abgekühlt wird, zwischen der Schicht supraleitenden Materials und der Platte magnetische Kräfte aufgebaut werden; diese Kräfte bewirken, daß die Wandler-Vorrichtung gegen die Wirkung des Druckmittels zur Platt hin von der Oberfläche der Platte weg auf eine vorbestimmte Höhe oberhalb der Plattenoberfläche gedrückt wird.

2. Eine Magnetkopf-/platten-Vorrichtung gemäß Anspruch 1, in der die Schicht supraleitenden Materials ein Material mit einer kritischen Temperatur über 77 Grad K umfaßt.

3. Eine Magnetkopf-/platten-Vorrichtung gemäß Anspruch 2, in der die Schicht supraleitenden Materials einen Oxidkeramik-Supraleiter umfaßt.

4. Eine Magnetkopf-/platten-Vorrichtung gemäß Anspruch 3, in der die Schicht supraleitenden Materials ein Material umfaßt, das aus der Gruppe seltener Erdmetall-Barium-Kupfer-Oxide (R Ba$_2$ Cu$_3$ O$_7$), wobei es sich bei dem seltenen Erdmetall R um Y, Nd, Sm, Eu, Gd, Dy, Ho, Er, Tm, Yb oder Lu, Calcium-Lanthanum-Barium-Kupferoxid (Ca La Ba $Cu_3$ $O_7$) und Wismuth-Strontium-Calcium-Kupferoxid-Verbindungen handelt, stammt.

5. Ein Plattenlaufwerk (10), das eine Magnetkopf-/platten-Vorrichtung gemäß allen Ansprüchen 1 bis 4 umfaßt, des weiteren bestehend aus: einem Kühlmittel (30) zur Kühlung der Schicht supraleitenden Materials auf eine unterhalb ihrer kritischen Temperatur liegende Temperatur.

6. Ein Plattenlaufwerk gemäß Anspruch 5, in dem die Magnetkopf-Vorrichtung in einem Vakuum eines vorbestimmten Pegels gehalten wird.

7. Ein Plattenlaufwerk gemäß Anspruch 5, in dem die Magnetkopf-Vorrichtung in einem Gas gehalten wird, so daß die vorbestimmte Höhe der Magnetkopf-Vorrichtung über der Fläche des magnetischen Speichermediums nicht nur abhängig ist von den magnetischen Kräften zwischen der magnetisierten Magnetspeicherplatte und der genannten Schicht supraleitenden Materials, sondern auch von den aerodynamischen Kräften des genannten Gases auf die Magnetkopf-Vorrichtung während der Rotation des Mediums.

8. Ein Plattenspeicher gemäß Anspruch 7, in dem als Gas Helium verwendet wird.

9. Ein Plattenspeicher gemäß Anspruch 7 oder 8, in dem das genannte Schiebergehäuse 32 so geformt ist, daß die aerodynamischen Eigenschaften des Schiebers innerhalb des Gases besser sind.

10. Ein Plattenspeicher gemäß jedem der Ansprüche 5 bis 9, in dem die magnetisch aufgezeichneten Daten lauflängenbegrenzte kodierte Daten umfassen.

**Revendications**

1. Ensemble à tête/disque magnétique pour une mémoire à disque magnétique comprenant :
   un disque d'enregistrement magnétique tournant ayant des données enregistrées sur sa surface, encodées selon un code définissant une distance maximale entre des transitions, et un ensemble transducteur magnétique (18) mobile radialement par rapport à la surface du disque, l'assemblage transducteur comprenant :
   un corps de patin (32) ayant une première surface positionnée pour faire face à la surface (36) du disque (11);
   un transducteur magnétique (20) supporté par une seconde surface du corps de patin ; et des moyens pour pousser l'assemblage transducteur vers la surface du disque ;
   caractérisé par
   une couche (44) de matériau supraconducteur disposé sur la première surface du corps de patin, le matériau supraconducteur présentant des propriétés supraconductrices endessous d'une température critique ;
   de sorte que lorsque la couche de matériau supraconducteur est refroidie à une température inférieure à sa température critique, des forces magnétiques sont développées entre la couche de matériau supraconducteur et le disque, les forces développées ayant pour effet d'éloigner l'assemblage transducteur de la surface du disque, en opposition à l'action des moyens pour pousser, jusqu'à une hauteur prédéterminée au-dessus de la surface du disque.

2. Ensemble à tête/disque magnétique selon la revendication 1, dans lequel ladite couche de matériau supraconducteur comprend un matériau ayant une température critique supérieure à 77 degrés K.

3. Ensemble à tête/disque magnétique selon la revendication 2, dans lequel ladite couche de matériau supraconducteur comprend un oxyde céramique conducteur.

4. Ensemble à tête/disque magnétique selon la revendication 3, dans lequel ladite couche de matériau supraconducteur comprend un matériau pris dans le groupe comprenant les Oxydes de Cuivre, Terres Rares, Baryum (R $Ba_2$ $Cu_3$ $O_7$), le matériau de Terres Rares R étant Y, Nd, Sm, Eu, Gd, Dy, Ho, Er, Tm, Yb ou Lu ; Oxyde de Cuivre Baryum Calcium Lanthanum (Ca La Ba $Cu_3$ $O_7$) ; et des composés d'Oxyde de Cuivre, Calcium, Strontium, Bismuth.

5. Mémoire à disque (10) comprenant un ensemble à tête/disque magnétique selon l'une quelconque des revendications 1 à 4, comprenant en outre :
   des moyens de refroidissement (30) pour refroidir la couche de matériau supraconducteur jusqu'à une température inférieure à sa température critique.

6. Mémoire à disque selon la revendication 5, dans laquelle l'assemblage à tête magnétique est maintenu dans un vide d'un niveau prédéterminé.

**7.** Mémoire à disque selon la revendication 5, dans laquelle l'assemblage à tête magnétique est maintenu dans un gaz de sorte que la hauteur prédéterminée de l'assemblage à tête magnétique au-dessus de la surface du milieu d'enregistrement magnétique est due non seulement à des forces magnétiques entre le disque d'enregistrement magnétique magnétisé et ladite couche de matériau supraconducteur mais également aux forces aérodynamiques dudit gaz sur l'assemblage à tête magnétique pendant la rotation du milieu.

**8.** Mémoire à disque selon la revendication 7, dans laquelle ledit gaz est de l'hélium.

**9.** Mémoire à disque selon la revendication 7 ou la revendication 8, dans laquelle ledit corps de patin (32) possède une forme propre à améliorer les caractéristiques aérodynamiques du corps de patin dans le gaz.

**10.** Mémoire à disque selon l'une quelconque des revendications 5 à 9, dans laquelle lesdites données enregistrées de façon magnétique comprennent des données codées de longueurs de course limitées.

FIG. 1

FIG. 2

$$Y = -(2h + t + \lambda)$$

$$Y = -(2h + \lambda)$$

(IMAGE HAS SAME SIGN)

$$M(X) = M\ SIN\ (KX)$$

$$Y = 0$$

$$Y = t$$

FIG. 6

FIG. 3

FIG. 4

FIG. 5